# EUROPÄISCHE PATENTANMELDUNG

(11) **EP 1 811 055 A1**
(43) Veröffentlichungstag der Anmeldung: **25.07.2007**
(21) Anmeldenummer: 06001255.6
(22) Anmeldetag: 20.01.2006
(51) Int. Cl.: C23C 4/02, C23C 4/08, C23C 28/00, F01D 5/28, B23P 15/02, B23K 26/38

(54) **Verfahren zur Herstellung eines Bauteils mit Löchern**

(71) Anmelder: SIEMENS AKTIENGESELLSCHAFT, 80333 München (DE)
(72) Erfinder: Klein, Karsten, Dr., 14089 Berlin (DE); Ladru, Francis-Jurjen, Dr., 14050 Berlin (DE); Reich, Gerhard, 10717 Berlin (DE)

(57) **Zusammenfassung**

Die Erfindung betrifft ein Verfahren zur Herstellung eines Bauteils (120, 130, 155), bei dem das Bauteil (120, 130, 155) mit einem Haftgrund für eine Wärmedämmsicht versehen wird und bei dem in das Bauteil (120, 130, 155) vor Auftragung der Wärmedämmschicht Löcher (418) mittels eines Energiestrahls eingeformt werden, welches dadurch gekennzeichnet ist, dass der Haftgrund vor der Einformung der Löcher (418) zumindest teilweise mit einer Schutzschicht versehen wird, die chemisch mit der Wärmedämmschicht identisch ist, und dass die Schutzschicht nach dem Einformen der Löcher (418) zumindest teilweise wieder entfernt wird.

## Beschreibung

Die Erfindung betrifft ein Verfahren zur Herstellung eines Bauteils, bei dem das Bauteil mit einem Haftgrund für eine Wärmedämmschicht versehen wird und bei dem in das Bauteil vor Auftragung der Wärmedämmschicht Löcher mittels eines Energiestrahls eingeformt werden.

Vor allem für Gasturbinen bestimmte Turbinenschaufeln und Brennkammern werden zur Verbesserung ihrer Temperatur- und/oder Abrasionsfestigkeit mit einer Schutzbeschichtung aus geeigneten Metallen, Metalllegierungen oder Keramiken versehen. Hierzu werden die Bauteile mit einem direkt auf den Bauteilkörper aufgebrachten Haftgrund der allgemeinen Zusammensetzung MCrAlX beschichtet, wobei M aus der Gruppe Eisen, Kobalt und/oder Nickel und X aus der Gruppe Yttrium, Lanthan und Seltene Erden ausgewählt sind. Dieser Haftgrund dient dem Korrosionsschutz und verbessert die Haftung einer später aufzubringenden Wärmedämmschicht. Die Wärmedämmschicht ist in der Regel keramischer Art und besteht beispielsweise aus voll- oder teilstabilisiertem Zirkoniumoxid oder aus Keramiken, die nicht, teilweise oder vollständig mittels Yttriumoxid und/oder Calciumoxid und/oder Magnesiumoxid stabilisiert sind. Der Auftrag des Haftgrunds und der Wärmedämmschicht geschieht mittels Sprühbeschichtungsverfahren, beispielsweise durch atmosphärisches Plasmaspritzen (APS), Niederdruckplasmasprühen (LPPS) oder Hochgeschwindigkeits-Flammspritzen (HVOF).

Bauteile der vorgenannten Art müssen teilweise mit Löchern versehen werden. Bei Turbinenschaufeln dienen sie dazu, Kühlluft austreten zu lassen, die über den Schaufelfuß der Turbinenschaufel in deren Hohlräume eingeleitet wird. Beispiele für solche Turbinenschaufeln finden sich in der EP 1 015 736 B1, EP 1 471 210, DE 692 10 892 T1, DE 36 42 789 A1 und DE 694 20 582 T2. Die austretende Kühlluft bildet auf der Außenseite eine als Isolierschicht wirkende Luftschicht.

Das Einformen der Löcher in das Bauteil geschieht im Stand der Technik häufig mittels eines Energiestrahls in Form eines Lasers (vgl. US 5,609,779, DE 100 63 309 A1, US 6,172,331 B1, US 6,054,673). Bei Bauteilen, die sowohl mit einem Haftgrund als auch mit einer Wärmedämmschicht versehen werden, wird das Einformen der Löcher zwischen dem Aufbringen des Haftgrunds und dem der Wärmedämmschicht durchgeführt. Aufgrund unvollständigen Verdampfens des metallischen Materials, aus dem das Bauteil, beispielsweise eine Turbinenschäufel, hergestellt ist, entstehen Laserzunder und metallische Spritzer. Diese setzen sich auf dem Haftgrund ab und verändern dort die Hafteigenschaften des Haftgrunds gegenüber der anschließend aufzubringenden Wärmedämmschicht. Das kann zu Abplatzungen der Wärmedämmschicht und letztendlich zum Versagen des Bauteils führen.

Der Erfindung liegt die Aufgabe zugrunde, ein Verfahren bereitzustellen, bei dem die nachteiligen Einwirkungen von Laserzunder und metallischen Spritzern vermieden wird.

Diese Aufgabe wird erfindungsgemäß dadurch gelöst, dass der Haftgrund vor dem Einformen der Löcher zumindest teilweise mit einer Schutzschicht versehen wird, die chemisch mit der Wärmedämmschicht identisch ist, und dass die Schutzschicht nach dem Einformen der Löcher zumindest teilweise wieder entfernt wird. Aufgrund der Schutzschicht lagern sich eventuell beim Einformen der Löcher entstehende Laserzunder und metallische Spritzer nicht auf dem Haftgrund ab, sondern werden in die Schutzschicht eingebunden. Die Schutzschicht wird anschließend wieder entfernt, wobei hierzu mechanische Hilfsmittel wie Bürsten o. dgl. nicht erforderlich sind. Aufgrund dessen bleiben die gewünschten Oberflächenmerkmale des Haftgrunds, wie Oberflächenrauheit und Struktur, erhalten. Abplatzungen der Wärmedämmschicht und damit ein einhergehendes Versagen des Bauteils werden dadurch vermieden.

Da das Material der Schutzschicht chemisch identisch mit der anschließend aufzubringenden Wärmedämmschicht ist, entstehen keine Nachteile, wenn Reste der Schutzschicht auf dem Haftgrund verbleiben. Sie werden beim Aufbringen der Wärmedämmschicht homogen in diese eingebunden und stören deshalb deren strukturelle Integrität nicht.

Das erfindungsgemäße Verfahren eignet sich besonders gut für Haftgründe, die aus MCrAlX bestehen, wobei M aus der Gruppe Eisen, Kobalt und/oder Nickel und X aus der Gruppe Yttrium, Lanthan und Seltene Erden ausgewählt sind. Solche Haftgründe bilden eine gute Haftunterlage für die später aufzubringende Wärmedämmschicht. Der Haftgrund kann thermisch aufgespritzt werden, was eine gleichmäßige Bedeckung des Bauteils gewährleistet. Hierzu können die schon oben genannten Sprühverfahren, wie Hochgeschwindigkeitsflammspritzen (HVOF), Kaltgasspritzen oder Vakuumspritzen eingesetzt werden.

Für die Schutzschicht und die Wärmedämmschicht kommen vor allem teil- oder vollstabilisiertes Zirkoniumoxid oder wärmedämmende Keramiken mit stabilisierenden Elementen wie z. B. CeO₂, HfO₂ etc. in Frage. Dabei kann die Wärmedämmschicht auch mehrlagig ausgebildet werden, wie dies beispielsweise in der DE 600 02 101 T2 und der DE 699 05 910 T2 beschrieben ist.

Die Schutzschicht kann auf den Haftgrund ebenfalls aufgespritzt werden. Dabei kann dieselbe Einrichtung, die auch zum Aufbringen des Haftgrunds verwendet worden ist, eingesetzt werden. Es ist aber auch möglich, die Schutzschicht als Suspension beispielsweise mit Hilfe eines Pinsels aufzutragen. Diese Methode ist besonders einfach, da sie keinen maschinellen Aufwand erfordert und der Auftrag der Schutzschicht auf diejenigen Bereiche beschränkt werden kann, die durch Laserzunder oder metallische Spritzer gefährdet sind.

Die Schutzschicht kann auf besonders einfache Weise mit Hilfe von Wasser entfernt werden, beispielsweise durch Abspülen oder Abspritzen mit einem Hochdruckstrahler.

Das erfindungsgemäße Verfahren eignet sich insbesondere für Bauteile, die zu einer Gasturbine gehören, beispielsweise Turbinenschaufeln, Brennkammern o. dgl. Da diese Bauteile hohen thermischen Belastungen ausgesetzt sind, ist es wesentlich, dass ein Abplatzen der Wärmedämmschicht durch Anwendung des erfindungsgemäßen Verfahrens vermieden wird. Das Bauteil selbst kann aus einer Superlegierung bestehen, wie sie für Turbinenschaufeln verwendet wird.

Die Erfindung wird beispielhaft anhand der Zeichnungen näher erläutert. Es zeigen schematisch:
- Figur 1: einen Längsteilschnitt einer Gasturbine,
- Figur 2: eine perspektivische Ansicht einer Laufschaufel der Gasturbine gemäß Figur 1 und
- Figur 3: eine Brennkammer der Gasturbine gemäß Figur 1.

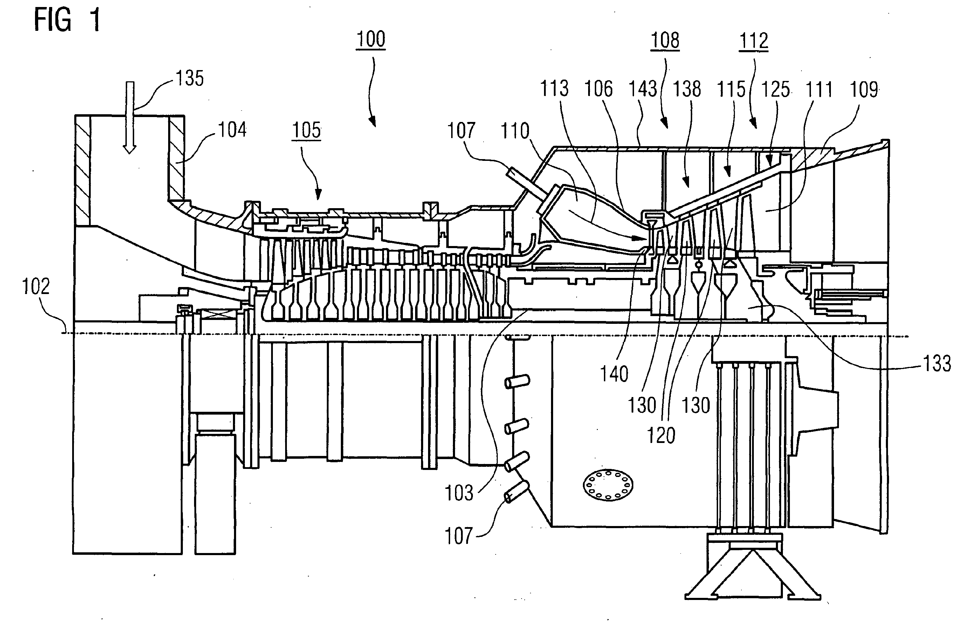

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109. Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet. Um den dort herrschenden Temperaturen standzuhalten, können diese mittels eines Kühlmittels gekühlt werden. Ebenso können Substrate der Bauteile eine gerichtete Struktur aufweisen, d.h. sie sind einkristallin (SX-Struktur) oder weisen nur längsgerichtete Körner auf (DS-Struktur). Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion aufweisen (MCrAlX; wobei M aus der Gruppe Eisen, Kobalt und/oder Nickel und X aus der Gruppe Yttrium, Lanthan und Seltene Erden ausgewählt sind). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrA1X-Schicht kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Calciumoxid und/oder Magnesiumoxid. Durch geeignete Beschichtungsverfahren wie z.B. Elektronenstrahlverdampfen (EB-PVD) oder atmosphärisches Plasmaspritzen (APS) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

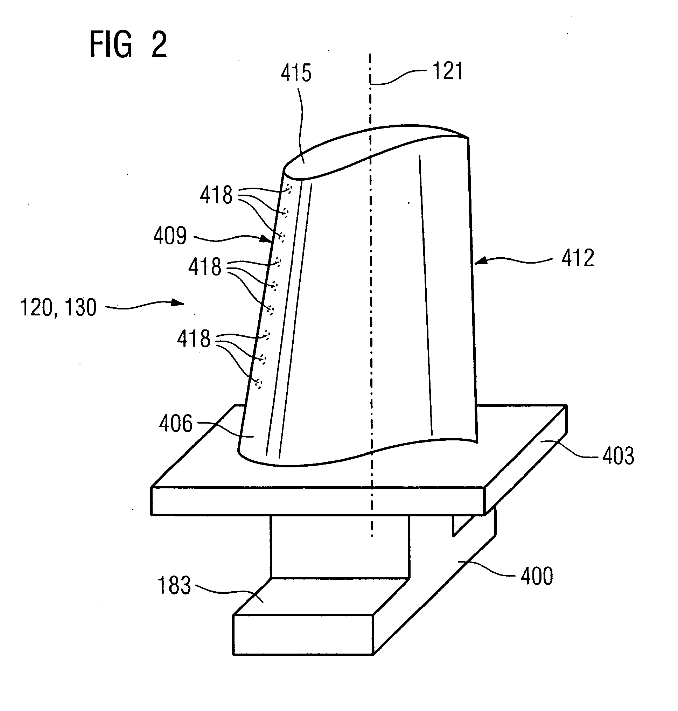

Figur 2 zeigt in perspektivischer Ansicht eine Laufschaufel 120 oder Leitschaufel 130 der Gasturbine 100, die sich entlang einer Längsachse 121 erstreckt. Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (hier nicht dargestellt). Der Schaufelfuß 183 ist beispielsweise als Hammerkopf ausgestaltet. Andere Ausgestaltungen als Tannenbaum- oder Schwalbenschwanzfuß sind möglich. Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Die Schaufeln 120, 130 weisen Beschichtungen gegen Korrosion oder Oxidation auf, z. B. MCrAIX, wobei M aus der Gruppe Eisen, Kobalt und/oder Nickel und X aus der Gruppe Yttrium, Lanthan und Seltene Erden ausgewählt sind. Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX-Beschichtung ist eine Wärmedämmschicht vorhanden. Sie besteht beispielsweise aus ZrO₂, Y₂O₃-ZrO₂, d.h. sie ist nicht, teilweise oder vollständig stabilisiert durch Yttriumoxid und/oder Calciumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt oder z.B. atmosphärisches Plasmaspritzen (APS) poröse, mikro- und makrorissbehaftete Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 ist hohl ausgebildet, wobei der Hohlraum über Filmkühllöcher 418 Verbindung nach außen hat. In den Hohlraum der Schaufel kann Kühlluft eingeführt werden. Sie strömt dann aus dem Filmkühllöchern 418 aus und bildet dabei eine wärmeisolierend wirkende Luftschicht an der Außenseite der Schaufel 120, 130.

Die Herstellung der Filmkühllöcher 418 geschieht in der Weise, dass auf eine auf die Schaufel 120, 130 aufgebrachte Beschichtung beispielsweise aus MCrAlX eine Schutzschicht aus einem Material aufgebracht wird, das mit dem Material der später aufzubringenden Wärmedämmschicht identisch ist. Dies kann mittels eines Spritzverfahrens, aber auch durch Auftragen einer entsprechenden Suspension geschehen. Die Schutzschicht dient dazu, den Haftgrund vor Laserzunder und Metallspritzern zu schützen, die beim Einformen der Filmkühllöcher 418 mittels eines Lasers entstehen können. Das Laserbohren erfolgt durch die Schutzschicht, den Haftgrund und das Material der Schaufel 120, 130. Nach Fertigstellung der Filmkühllöcher 418 wird die Schutzschicht unter Verwendung eines Hochdruckwasserstrahls durch Abspritzen entfernt. Danach erfolgt der Auftrag der Wärmedämmschicht.

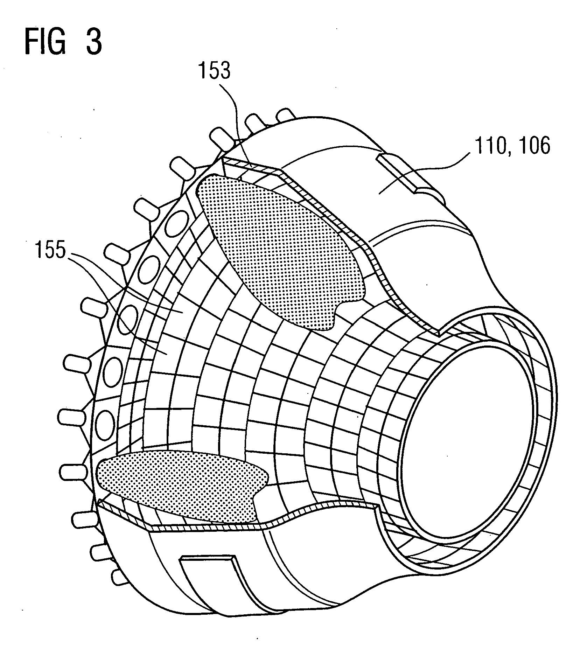

Die Figur 3 zeigt die Brennkammer 110 der Gasturbine 100 (Fig. 1). Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt. Diese Schutzschichten können ähnlich der Turbinenschaufeln sein, also bedeutet beispielsweise MCrAlX: M ist aus der Gruppe Eisen, Kobalt und/oder Nickel und X aus der Gruppe Yttrium, Lanthan und Seltene Erden ausgewählt. Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein. Sie besteht beispielsweise aus ZrO₂, Y₂O₃-ZrO₂, d.h. sie ist nicht, teilweise oder vollständig stabilisiert durch Yttriumoxid und/oder Calciumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf. Die Filmkühllöcher können in der gleichen Weise hergestellt werden wie die Filmkühllöcher 418 bei der Schaufel 120, 130.

## Patentansprüche

1. Verfahren zur Herstellung eines Bauteils (120, 130, 155), bei dem das Bauteil (120, 130, 155) mit einem Haftgrund für eine Wärmedämmsicht versehen wird und bei dem in das Bauteil (120, 130, 155) vor Auftragung der Wärmedämmschicht Löcher (418) mittels eines Energiestrahls eingeformt werden,
**dadurch gekennzeichnet, dass**
der Haftgrund vor der Einformung der Löcher (418) zumindest teilweise mit einer Schutzschicht versehen wird, die chemisch mit der Wärmedämmschicht identisch ist, und
dass die Schutzschicht nach dem Einformen der Löcher (418) zumindest teilweise wieder entfernt wird.

2. Verfahren nach Anspruch 1,
**dadurch gekennzeichnet, dass**
für den Haftgrund MCrAlX verwendet wird, wobei M aus der Gruppe Eisen, Kobalt und/oder Nickel und X aus der Gruppe Yttrium, Lanthan oder Seltene Erden ausgewählt werden.

3. Verfahren nach Anspruch 1 oder 2,
**dadurch gekennzeichnet, dass**
der Haftgrund thermisch aufgespritzt wird.

4. Verfahren nach einem der Ansprüche 1 bis 3,
**dadurch gekennzeichnet, dass**
für die Schutzschicht und die Wärmedämmschicht voll- oder teilstabilisiertes Zirkoniumoxid oder eine Keramik mit stabilisierenden Elementen wie z.B. CeO₂, HfO₂ verwendet wird.

5. Verfahren nach einem der Ansprüche 1 bis 4,
**dadurch gekennzeichnet, dass**
die Wärmedämmschicht als ein Mehrlagenschichtsystem ausgebildet wird.

6. Verfahren nach einem der Ansprüche 1 bis 5,
**dadurch gekennzeichnet, dass**
die Schutzschicht aufgespritzt ist oder als Suspension aufgetragen wird.

7. Verfahren nach einem der Ansprüche 1 bis 6,
**dadurch gekennzeichnet, dass**
die Schutzschicht nach dem Einformen der Löcher (418) durch Abspülen mit Wasser entfernt wird.

8. Verfahren nach einem der Ansprüche 1 bis 7,
**dadurch gekennzeichnet, dass**
als Bauteil (120, 130, 155) ein Teil einer Turbine, insbesondere einer Gasturbine (100), verwendet wird.

9. Verfahren nach einem der Ansprüche 1 bis 8,
**dadurch gekennzeichnet, dass**
ein Bauteil (120, 130, 155) verwendet wird, das aus einer Superlegierung besteht.
